Europäisches Patentamt

**European Patent Office**

Office européen des brevets

(19)

(11) Publication number: **0 028 532**
**B1**

# (12) EUROPEAN PATENT SPECIFICATION

(45) Date of publication of patent specification: **22.08.84**

(51) Int. Cl.³: **G 01 G 19/07, G 01 G 19/12**

(21) Application number: **80303926.2**

(22) Date of filing: **04.11.80**

(54) **Weight indicator for an aircraft.**

(30) Priority: **06.11.79 GB 7938414**

(43) Date of publication of application:
**13.05.81 Bulletin 81/19**

(45) Publication of the grant of the patent:
**22.08.84 Bulletin 84/34**

(84) Designated Contracting States:
**DE FR IT**

(56) References cited:
**FR-A-2 097 395**
**US-A-3 584 503**

**INSTRUMENTS & CONTROL SYSTEMS, vol.
42, april 1969, no. 4, Radnor, PA. USA J.C.
LOWREY: "Aircraft weighing system", page 127**

(73) Proprietor: **NATIONAL RESEARCH
DEVELOPMENT CORPORATION
101 Newington Causeway
London SE1 6BU (GB)**

(72) Inventor: **Tippen, John Frank
Woodend Cottage 1 Longdown Road Lower
Bourne
Farnham Surrey (GB)**

(74) Representative: **Gunning, William John
Procurement Executive, Ministry of Defence
Patents 1A(4), Room 1932 Empress State
Building Lillie Road
London SW6 1TR (GB)**

Courier Press, Leamington Spa, England.

## Description

The invention relates to payload indicators and particularly to payload indicators for rotary-wing aircraft.

In this context, the term payload as applied to aircraft is to be taken as a descriptive term signifying that which is carried by an aircraft but which is not part of the structure of the aircraft. The term payload embraces pilots, passengers, cargo and fuel and hence the phrase payload weight signifies the weight of the pilots, passengers, cargo and fuel carried by an aircraft.

The weight of an aircraft is the sum of the payload weight and the weight of the structure of the aircraft and must not exceed a value known as the maximum all-up weight (MAUW) or the safety of the aircraft may be jeopardized.

The position of the centre of gravity (CG) of an aircraft carrying a payload must be within certain limits, known as the fore and aft CG limits or the safety of the aircraft may be jeopardized. The position of the centre of gravity in an aircraft may be adjusted by moving parts of the payload.

Rotary-wing aircraft, particularly military helicopters, are frequently required to take off from a parked position which is not level. Compensation for a variable parking attitude is therefore important in aircraft weight and centre of gravity monitoring.

A currently used, but inefficient system for ensuring correct aircraft weight and centre of gravity requires a person to supervise the placing of the payload according to personal experience and, in some cases, according to an inaccurate calculation.

In certain circumstances, for instance when men and equipment are to be transported in a battle situation, rapid distribution of the payload about the aircraft may be necessary. In such circumstances the extra weight of a crew member to supervise distribution of the payload and also the time used in supervision are a disadvantage.

FR—A—2.097.395 discloses fixed-wing aircraft load indicator which comprises a clinometer for measuring aircraft pitch when the aircraft is being supported by undercarriage support members when parked, said load indicator including load transducer means which measures undercarriage type pressure, said transducer means outputs connected to a computing unit which also has an input for connecting the clinometer such that the computing unit computes mean aerodynamic chord taking account of the inclination of the aircraft relative to its longitudinal axis, said load indicator also including a load indicator display connected to receive an output from the computing unit and display the aircraft all up weight and the position of a spanwise line through the centre of gravity expressed as a percentage of mean aerodynamic chord.

US—A—3,584,503 and "Instruments and Control Systems", Vol. 42, April 1969, No. 4, Radnor, PA USA, J. C. Lowrey: "Aircraft Weighing System", page 127 also disclose fixed-wing aircraft load indicators. However none of the disclosed load indicators are directed to rotary-wing aircraft systems for compensating for the inclination of the aircraft in any direction when calculating all up weight.

An aim of the invention is to provide an apparatus for monitoring aircraft weight and centre of gravity when the aircraft is parked on ground which may not be level.

A weight indicator for an aircraft, particularly a rotary wing aircraft, having undercarriage support members, comprises load transducer means arranged to measure the static weight supported along the undercarriage support members, an attitude meter having an output indicative of the attitude of the aircraft, a computing unit connected to receive outputs from the attitude meter and the load transducer means and arranged to derive a payload weight signal from the output, from the load transducer means, and a payload indicator display connected to the computing unit to display the payload weight signal, characterised in that said load transducer means are force transducers, in that the computing unit is arranged to derive the payload weight signal from the outputs from the attitude meter and the force transducer means, the payload weight signal being compensated for the attitude of the aircraft, and in that the payload indicator display is connected to receive the attitude compensated payload weight signal and to display the attitude-compensated payload weight.

The undercarriage support members may comprise skids connected to legs, the force transducer means comprising pressure transducers mounted on the legs. Alternatively the undercarriage support members may comprise wheels mounted on legs.

The force transducer means preferably comprises a plurality of strain gauges.

The computing unit may be a dedicated unit, for instance a microprocessor. Alternatively a general purpose computer which may, for example, be already installed on the aircraft may be used, the computer having been programmed to process force transducer and attitude data and provide an output for the weight indicator display.

In addition to aircraft weight monitoring, the weight indicator may also monitor incremental changes in output from the force transducers in order to give aircraft centre of gravity information and display this information on the weight indicator display.

The weight indicator may be constructed to give an indication on the display of the point at which the aircraft reaches its MAUW. The MAUW is dependent upon prevailing environmental conditions. The weight indicator may therefore additionally include means for taking account of temperature or altitude or both in the MAUW used for the weight indicator display.

Aircraft weight information may be displayed on the weight indicator display by a series of horizontal bar lights stacked one on top of the other in a vertical array, the number of bar lights lit up (numbering starting from the bottom of the vertical array) giving an indication of the weight of the aircraft. A distinctively coloured horizontal bar light contained in the array may therefore indicate the MAUW.

Centre of gravity information may be displayed on the weight indicator display by four additional series of bar lights, one series comprising a plurality of horizontal bar lights stacked in a vertical array above the bar lights for the weight display, a second series similar to the first below the bar lights for the weight display, a third series comprising a plurality of vertical bar lights stacked in a horizontal array to the left of the bar lights for the load weight display, and a fourth series similar to the third series to the right of the bar lights for the load weight display. The centre of gravity display may then operate such that if too much of the payload weight is situated, for instance, aft of the aircraft, lights in the second series light up, the number lighting up depending on the excess of payload aft and if too much of the payload weight is situated, for instance, fore of the aircraft, lights in the first series light up, the number lighting up depending on the excess of payload fore.

The invention will now be described by way of example only with reference to the accompanying drawings of which

Fig. 1 is a block diagram representing a weight and centre of gravity indicator according to the invention applied to a helicopter supported, when grounded, by three wheel assemblies, one assembly positioned fore and the remaining two positioned symmetrically aft of the helicopter,

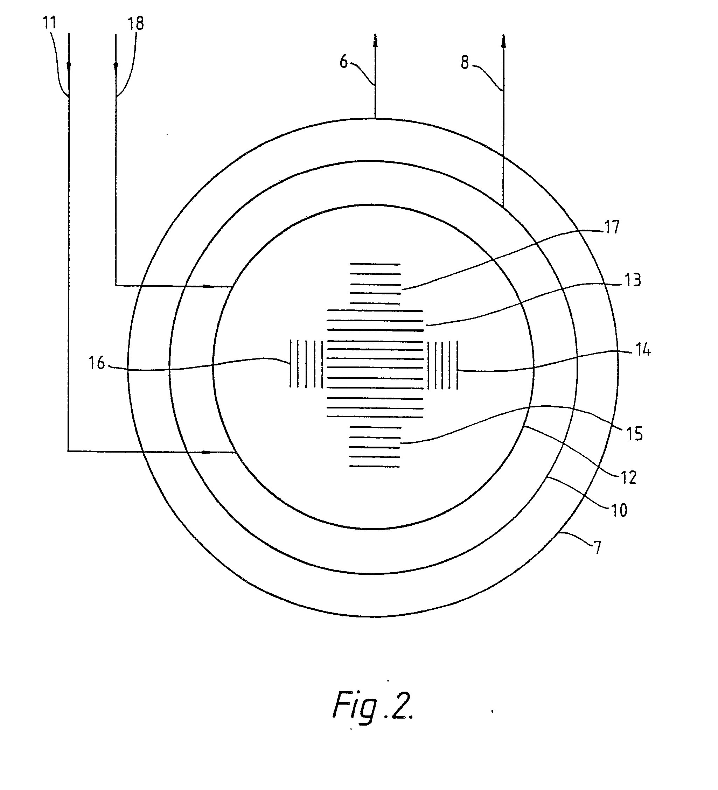

Fig. 2 is a diagram of a weight and centre of gravity indicator display with surrounding dials included in the load indicator of Fig. 1.

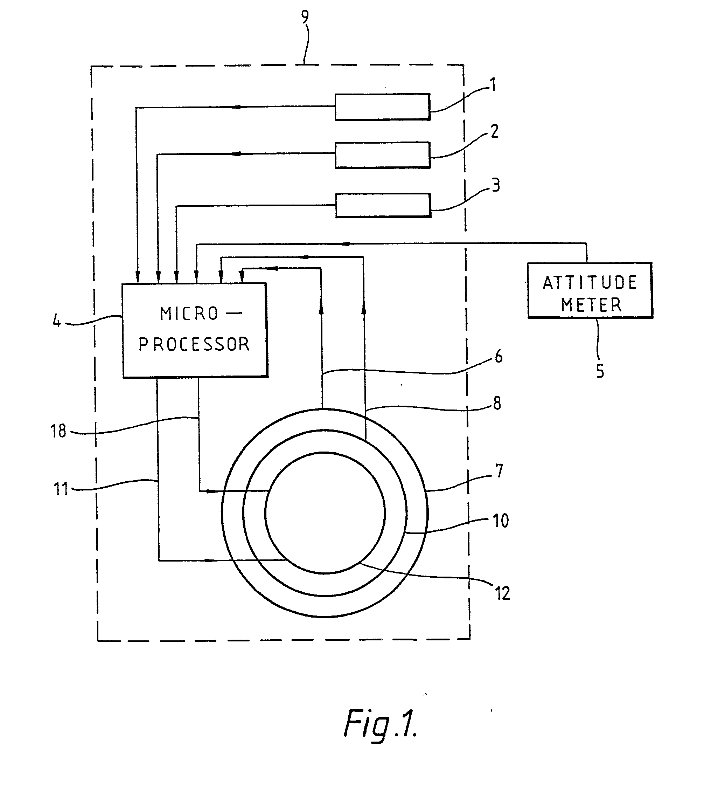

In Fig. 1 a weight and centre of gravity indicator, 9, includes three strain gauges, 1, 2 and 3, one mounted along a line on each of the three helicopter wheel assemblies such that their resistance gives a measure of the component of weight of a payload carried by the helicopter which is transmitted along the line through each of the wheel assemblies.

An output from each of the strain gauges, 1, 2 and 3 is connected to convey a strain gauge signal to a microprocessor unit, 4, which is programmed to calculate the payload weight in the helicopter using the components of the helicopter weight along the lines of the wheel assemblies as registered by the strain gauges and denoted in their output signals.

The microprocessor unit, 4, of the weight and centre of gravity indicator is also connected to an attitude meter, 5, already present on the helicopter so as to supply pitch and roll data to the unit, enabling it to calculate the payload weight by taking the data into account. When the helicopter is on level ground, attitude information is not necessary for the calculation, strain gauge data from the three strain gauges being sufficient.

The microprocessor unit, 4, also has an input, 6, for outside air temperature (OAT) data and an input, 8, for altitude data. OAT Data is fed to the microprocessor unit electrically by a pilot of the helicopter manually setting a circular OAT dial, 7, which is rotatably mounted around the circumference of a circular load indicator display, 12, in the helicopter cockpit to the correct OAT setting. Altitude data is also input electrically by the pilot setting a circular altitude dial, 10 which is rotatably mounted around the OAT dial, 7, to the correct setting.

Outputs 11 and 18 of the microprocessor unit, 4, are connected to the weight and centre of gravity indicator display, 12, which gives a display representative of the weight of the payload carried by the helicopter.

The display is made up of five series of bar lights, 13, 14, 15, 16 and 17. Series 13 is composed of twelve horizontal bar lights stacked, one on top of the other, in a vertical array. The first nine and also the eleventh and twelfth of the series of bar lights (numbering from the bottom to the top) are coloured yellow and the tenth is coloured red.

When the microprocessor unit, 4, has calculated the payload weight it outputs a signal via output 11 to the display, 12, to cause a consecutive number of lights in the series 13 to light up. The number of lights, beginning with the bottom light of the series, which light up increases as the payload weight carried by the helicopter increases. Thus, when no lights are showing the helicopter is empty and when the first nine yellow lights and the red tenth light are lit up, the helicopter has reached MAUW. In between these two extremes, the number of lights which light up increases proportionately with the payload weight.

The MAUW point varies according to prevailing environmental parameters, including OAT and altitude. The microprocessor unit, 4, is programmed to take account of these parameters, input via inputs 6 and 8, when processing the signal to be output on output 11.

The weight and centre of gravity indicator also monitors the centre of gravity of the helicopter by means of the microprocessor unit, 4, which processes incremental changes in the strain gauge signals from the three strain gauges and produces an output signal to the indicator display, 12, via output 18, the output signal being supplied to series 14, 15, 16 and 17 of the bar lights.

Series 14 and 16 each consist of five vertical bar lights stacked in a horizontal array, series 14 to the right and series 16 to the left of series 13. Series 15 and 17 each consist of five horizontal bar lights stacked in a vertical array, series 15 below and series 17 above series 13.

If, for instance, incremental changes in the strain gauge signals sent to the microprocessor unit indicate an excess of payload weight to port, the unit outputs a signal on output 18 which causes a number of the lights in series 16 to light up, the number increasing as the excess of payload weight to port increases and the lights lighting consecutively, beginning with the bar light nearest to series 13.

The tilt of the helicopter's main rotor is dependent upon the position of a collective pitch lever (not shown in the drawings) and of a cyclic stick (also not shown in the drawings). When the weight and centre of gravity indicator, 9, is in use on the parked helicopter the collective pitch lever must be fully down and the cyclic stick must be centralised so as to put the main rotor into a symmetrical position with respect to the helicopter's fuselage.

The scope of the invention is not confined to the details disclosed above, variations being apparent to those skilled in the art. Use of a dedicated microprocessor may, for instance, be substituted by use of a computer already on board the aircraft. A simpler arrangement may not, for instance, take into account OAT and altitude automatically without the need for pilot intervention.

The weight and centre of gravity indicator display may take on a form other than that outlined above. MAUW may, for instance, be indicated by a flashing light, or, for instance, by an audio signal.

Alternatively the display may be formed on a CRT which may, for example, be included in a cockpit management system.

## Claim

A weight indicator for an aircraft, particularly a rotary wing aircraft, having undercarriage support members, comprising load transducer means (1, 2, 3) arranged to measure the static weight supported along the undercarriage support members, an attitude meter (5) having an output indicative of the attitude of the aircraft, a computing unit (4) connected to receive outputs from the attitude meter and the load transducer means and arranged to derive a payload weight signal from the outputs from the load transducer means, and a payload indicator display (12) connected to the computing unit to display the payload weight signal, characterised in that said load transducer means are force transducers, in that the computing unit is arranged to derive the payload weight signal from the outputs from the attitude meter (5) and the force transducer means (1, 2, 3), the payload weight signal being compensated for the attitude of the aircraft, and in that the payload indicator display (12) is connected to receive the attitude compensated payload weight signal and to display the attitude-compensated payload weight.

## Revendication

Indicateur de poids pour un aéronef, en particulier un aéronef à voilure tournante comportant des éléments porteurs de train d'atterrissage, comprenant des transducteurs de charge (1, 2, 3) agencés pour mesurer le poids statique supporté le long des éléments porteurs du train d'atterrissage, un dispositif de mesure d'attitude (5) comportant une sortie indiquant l'attitude de l'aéronef, une unité de calcul (4) connectée de manière à recevoir des sorties provenant du dispositif de mesure d'attitude et des transducteurs de charge et agencée pour dériver un signal de poids de charge utile à partir des sorties des transducteurs de charge, et un dispositif d'affichage d'indicateur de charge utile (12) relié à l'unité de calcul pour afficher le signal de poids de charge utile, caractérisé en ce que lesdits transducteurs de charge sont des transducteurs de force, en ce que l'unité de calcul est agencée pour dériver le signal de poids de charge utile des sorties du dispositif de mesure d'attitude (5) et des transducteurs de force (1, 2, 3), le signal de poids de charge utile étant compensé en fonction de l'attitude de l'aéronef, et en ce que le dispositif d'affichage d'indicateur de charge utile (12) est connecté de manière à recevoir le signal de poids de charge utile compensé pour attitude et à afficher le poids de charge utile compensé pour attitude.

## Patentanspruch

Gewichtsanzeiger für ein Flugzeug, insbesondere für ein Drehflügelflugzeug mit Untergestell-Stützelementen, mit Lastwandlern (1, 2, 3) zur Messung des von den Untergestell-Stützelementen getragenen statischen Gewichts, einem Lagemeßgerät (5), dessen Ausgangssignal die Flugzeuglage anzeigt, einer Recheneinheit (4), welche die Ausgangssignale von dem Lagemeßgerät und den Lastwandlern empfängt und aus den Ausgangssignalen der Lastwandler ein Nutzlastgewichtssignal ableitet, und mit einem mit der Recheneinheit verbundenen Nutzlastanzeigegerät (12) zur Anzeige des Nutzlastgewichtssignals, dadurch gekennzeichnet, daß die Lastwandler Kraftwandler sind, daß weiter die Recheneinheit so ausgebildet ist, daß sie das Nutzlastgewichtssignal aus den Ausgangssignalen des Lagemeßgeräts (5) und der Kraftwandler (1, 2, 3) ableitet, daß ferner das Nutzlastgewichtssignal durch die Flugzeuglage kompensiert wird, und daß das Nutzlastanzeigegerät (12) so geschaltet ist, daß es das lagekompensierte Nutzlastgewichtssignal empfängt und dieses lagekompensierte Nutzlastgewicht anzeigt.

O O28 532

Fig.1.

1

Fig.2.